Europäisches Patentamt

European Patent Office

Office européen des brevets

(11) Veröffentlichungsnummer: **0 129 784**
**B1**

(12) # EUROPÄISCHE PATENTSCHRIFT

(45) Veröffentlichungstag der Patentschrift:
**26.10.88**

(51) Int. Cl.⁴: **C 01 B 25/30,** C 01 B 25/237

(21) Anmeldenummer: **84106792.9**

(22) Anmeldetag: **14.06.84**

(54) Verfahren zur Entfluorierung von Alkaliphosphatlösungen.

(30) Priorität: **23.06.83 DE 3322503**

(43) Veröffentlichungstag der Anmeldung:
**02.01.85 Patentblatt 85/1**

(45) Bekanntmachung des Hinweises auf die Patenterteilung:
**26.10.88 Patentblatt 88/43**

(84) Benannte Vertragsstaaten:
**BE DE FR GB IT NL SE**

(56) Entgegenhaltungen:
**US - A - 3 625 648**
**US - A - 4 134 964**

(73) Patentinhaber: **HOECHST AKTIENGESELLSCHAFT,**
**Postfach 80 03 20, D-6230 Frankfurt am Main 80 (DE)**

(72) Erfinder: **Schimmel, Günther, Dr., Ehrenstrasse 16,**
**D-5042 Erftstadt (DE)**
Erfinder: **Ressel, Herbert, Dr., Am Kapellenbusch 29,**
**D-5042 Erftstadt (DE)**
Erfinder: **Heymer, Gero, Dr., Fasanenaue 12,**
**D-5042 Erftstadt (DE)**
Erfinder: **Gradl, Reinhard, Dr., Am grünen Weg 6,**
**D-5030 Hürth (DE)**

## Beschreibung

Die vorliegende Erfindung betrifft die Herstellung fluorarmer Alkaliphosphatlösungen aus vorgereinigten Alkaliphosphatlösungen, die erhalten wurden durch Aufschluss von Phosphaterz mit Schwefelsäure, Abtrennen des dabei gebildeten Gipses von der rohen Nassverfahrensphosphorsäure, Neutralisation dieser Rohsäure mit Alkalien bis zu einem pH-Wert grösser als 6 und abfiltrieren des ausgefällten Niederschlages von der entstandenen Alkaliphosphatlösung.

Nassverfahrensphosphorsäure entsteht durch Aufschluss von Apatit-Mineralien mit Schwefelsäure unter Abtrennen des gebildeten Calciumsulfats. Diese rohe Phosphorsäure enthält in gelöster Form den Grossteil der im Erz enthaltenen kationischen Verunreinigungen sowie das aus dem Apatit stammende Fluorid in Form von HF bzw. $H_2SiF_6$. Es hat daher nicht an Versuchen gefehlt, den F-Gehalt in Phosphorsäure- oder Phosphatlösungen zu reduzieren. Dabei wird aus sauren Lösungen das Fluorid im wesentlichen entweder gasförmig ausgetrieben oder als Feststoff ausgefällt. Im ersten Fall wird die Säure meist mit Dampf behandelt, wobei HF bzw. $SiF_4$ entweichen (vgl. DE-A-28 22 303). Das Ausfällen im sauren Medium erfolgt häufig als $Na_2SiF_6$, indem man entweder Natrium- oder Siliziumionen oder beide in stöchiometrischen Mengen zusetzt (vgl. DE-C-16 67 435). Alle genannten Verfahren haben den Nachteil, dass sie entweder viel Energie in Form von Dampf und eine aufwendige Strippapparatur benötigen, oder aber dass durch Fällung im sauren Milieu der F-Gehalt aufgrund der hohen Salzlöslichkeit nur ungenügend abgebaut wird. So gelingt z.B. nach der DE-C-16 67 435 durch Ausfällen von $Na_2SiF_6$ eine Abreicherung nur bis auf 0,2% $F/P_2O_5$. Nach der US-A-4 026 995 kann in Phosphorsäure das Fluor durch Zugabe von Calciumphosphat als $CaF_2$ ausgefällt werden, wobei bestenfalls eine Abreicherung bis auf 0,3% $F/P_2O_5$ erreichbar ist.

Die Entfernung von Fluoridionen aus neutralen Phosphatlösungen ist ebenfalls schon versucht worden. So wird nach der DE-A-26 35 893 rohe Phosphorsäure zunächst mit Amylalkohol extraktiv gereinigt, wobei nach Reextraktion eine weitgehend gereinigte Phosphorsäure entsteht, die anschliessend mit Natronlauge einer Fällungsreinigung unterzogen wird, bei der eine Natriumphosphatlösung mit einem pH-Wert von 6,5–7 und ca. 20% $P_2O_5$ entsteht, die nur noch ca. 20 ppm $F^-$ enthält. Diese Na-Phosphatlösung wird mit grossem Überschuss von festem Hydroxylapatit bzw. tertiärem Calciumphosphat weiterbehandelt, wodurch der $F^-$-Gehalt bis auf wenige ppm F abgebaut werden kann.

Nachteilig an diesem Verfahren ist der Einsatz von teurem, synthetischem Hydroxylapatit, der zudem in beträchtlichem stöchiometrischen Überschuss eingesetzt werden muss. So wird beispielsweise für eine Abreicherung von 152,6 ppm F auf 17,3 ppm F eine $Ca^{2+}$-Menge benötigt, die der 42-fachen molaren $F^-$-Menge entspricht. Ferner ist das beschriebene Verfahren wegen der zweistufigen Reinigungsoperation, nämlich der Kombination aus Extraktions- und Fällungsreinigung, sehr aufwendig.

Durch eine sogenannte Fällungsreinigung der Rohsäure mit Alkalien, z.B. Natronlauge, werden die kationischen Verunreinigungen fast quantitativ ausgefällt, und es entsteht nach Abtrennen der ausgefallenen Feststoffe (Metallphosphate und -hydroxide) eine Alkaliphosphatlösung, die für viele technische Anwendungen eine bereits ausreichende Reinheit besitzt, jedoch hinsichtlich des F-Gehaltes unbefriedigend hohe Werte aufweist (vgl. DE-C-20 35 505).

Wird diese Fällungsreinigung in aufwendiger Weise dreistufig ausgeführt, so wird eine Dinatriumphosphat-Lösung mit niedrigen Fluor-Gehalten produziert (vergl. US-A-2 271 712). Diese Mehrstufigkeit ist jedoch technisch sehr aufwendig, da jeweils nach dem Einstellen eines NA:P-Verhältnisses von 0,16:1 bzw. ca. 1:1 eine Zwischenfiltration der Neutralisationsmaische erforderlich ist. Wie in der US-A-2 271 712 angegeben ist, führt die technisch wesentlich einfachere einstufige Neutralisation bis zur Stufe des Dinatriumphosphates auch hier zu höheren Fluor-Gehalten.

Es bestand daher die Aufgabe, eine aus roher Nassverfahrensphosphorsäure ausschliesslich durch einstufige Neutralisation bis zu einem pH-Wert grösser als 6 erhaltene, vorgereinigte Alkaliphosphatlösung auf einfachem, preiswertem und technisch leicht durchführbarem Wege so weit zu entfluorieren, dass ein für die meisten technischen Anwendungen befriedigend niedriger $F^-$-Gehalt resultiert.

Überraschenderweise lässt sich diese Aufgabe lösen, wenn man die vorgereinigte Alkaliphosphatlösung mit einer Verbindung eines Erdalkalimetalls Me, die eine Wasserlöslichkeit bei 20 °C von mehr als 0,01 mol $Me^{2+}$/l aufweist, bei Temperaturen von 60 bis 120 °C verrührt, wobei Erdalkaliverbindungen, deren Wasserlöslichkeiten weniger als 5 g/l betragen, mit einer Korngrösse eingesetzt werden, die zu mehr als 50% unter 8 μm liegt, und man nach einer Reaktionszeit von 0,5 bis 4 Stunden den gebildeten Niederschlag von der gereinigten Alkaliphosphatlösung abtrennt.

Als Erdalkaliverbindungen mit geringer Wasserlöslichkeit werden vorzugsweise feinteilige Erdalkalioxide oder -hydroxide, insbesondere CaO bzw. $Ca(OH)_2$ in fester Form und die Erdalkaliverbindungen mit hoher Wasserlöslichkeit, wie z.B. $Mg(NO_3)_2$ oder $Ca(NO_3)_2$, in Form ihrer wässrigen Lösungen der Alkaliphosphatlösung zugesetzt.

Es empfiehlt sich, die Erdalkaliverbindung, bezogen auf die Bildung des entsprechenden Erdalkalifluorids, in der 2 bis 20fachen stöchiometrischen Menge einzusetzen. Den nach der Umsetzung gebildeten und von der gereinigten Alkaliphosphatlösung abgetrennten Niederschlag wäscht man am besten mit warmem Wasser aus und führt den Niederschlag zur Rückgewinnung des darin enthaltenen $P_2O_5$ in den Phosphaterzaufschluss zurück.

Die erfindungsgemässe Verfahrensweise besitzt eine Reihe von Vorteilen, wobei zwei Hauptanforderungen erfüllt werden, nämlich eine gute Entfluorierungswirkung bei niedrigem Materialeinsatz sowie eine hohe Filtrationsleistung während der Abtrennung des fluoridhaltigen neutralen bis alkalischen Filterkuchens.

In nicht vorhersehbarer Weise wurde gefunden, dass sich Erdalkaliverbindungen beim Verrühren mit fluoridhaltigen Natriumphosphatlösungen (Mol-Verhältnis $PO_4$:F $\approx$ 100:1) nicht ausschliesslich zu Calciumphosphaten umsetzen, sondern sogar bevorzugt Erdalkalifluorid bilden. Dabei ist bei gegebenem Kation, z.B. $Ca^{2+}$, die Entfluorierungswirkung umso besser, je feinteiliger die Verbindung und je höher deren Löslichkeit ist. So wirkt z.B. $Ca(OH)_2$ besser als CaO gleicher Mahlfeinheit, andererseits zeigt ein grobes $Ca(OH)_2$ gegenüber einem feinteiligen eine extrem verringerte Wirksamkeit (vgl. Beispiele 10 und 7).

Lösliche Salze, z.B. $Ca(NO_3)_2$ oder $Mg(NO_3)_2$ verfügen, soweit sie als wässrige Lösungen eingesetzt werden, über eine etwas höhere spezifische Entfluorierungswirkung, weisen jedoch gegenüber Oxiden bzw. Hydroxiden einige Nachteile auf, nämlich

    a) Kontaminierung der Phosphatsalzlösung mit fremden Anionen
    b) schlechtere Filtrierbarkeit der Maische
    c) höherer $P_2O_5$-Einschluss im Filterkuchen
    d) ihr höherer Preis, bezogen auf die gleiche Kationenmenge in Form von Oxiden oder Hydroxiden.

Völlig wasserunlösliche Verbindungen, wie z.B. feingemahlener Kalkstein, zeigen keine Wirkung (s. Beispiel 11).

Von grösster Wichtigkeit ist die Reaktionstemperatur, wie aus den nachfolgenden Beispielen hervorgeht (vgl. Beispiel 4, 7 und 8). So führen Reaktionstemperaturen unter 60 °C dazu, dass neben unbefriedigender Entfluorierungswirkung ein extrem schlecht filtrierbarer und auch schlecht waschbarer Filterkuchen sich bildet. Temperaturerhöhung auf 100–110 °C führt bei sonst gleichbleibenden Parametern zu deutlich gesteigerter Fluoridabreicherung.

Zu kurze und zu lange Verweilzeiten sind zu vermeiden, da beide zu verminderter $F^-$-Abreicherung führen, im ersten Fall durch unvollständige Umsetzung, im zweiten Fall durch Wiederauflöseerscheinungen (vgl. Beispiele 7 und 9). Eine Kontaminierung der Phosphatsalzlösung durch Erdalkaliionen wurde nicht beobachtet.

Aus dem Gesagten geht hervor, dass eine besonders vorteilhafte Ausführungsform der Erfindung in dem Einsatz von Erdalkalihydroxiden in feinster Form bei Temperaturen oberhalb 80 °C und Verweilzeiten von 2–3 Stunden besteht, wobei $Mg^{2+}$ gegenüber $Ca^{2+}$ den Nachteil besitzt, dass über Tage hinweg schwache Nachfällungen in der Phosphatlösung auftreten.

Zusammenfassend können folgende Vorteile des erfindungsgemässen Verfahrens angeführt werden:

    1. hohe $F^-$-Abreicherung bei geringem Einsatz von Erdalkalichemikalien
    2. Erdalkali wird in preiswerter Form eingesetzt
    3. geringer Apparatebedarf
    4. hohe Raum/Zeit-Ausbeute durch sehr gute Filtrationsleistung
    5. keine Kontaminierung der Phosphatlösung durch zugesetzte Kationen.

Anhand der nachfolgenden Beispiele soll die Erfindung näher erläutert werden, ohne jedoch den Erfindungsgegenstand darauf einzuschränken.

Beim Aufschluss von Kola-Phosphat mit Schwefelsäure entsteht unter Zugabe von Natriumsulfat und $SiO_2$ nach der Gipsfiltration eine Rohphosphorsäure mit etwa 0,25% F und 28% $P_2O_5$. Durch Neutralisation mit Natronlauge bei pH 8,5 wird aus dieser Säure eine gereinigte Dinatriumphosphatlösung hergestellt und von den ausgefallenen Verunreinigungen abgetrennt.

Für die nachfolgenden Versuche wurden zwei verschiedene, gereinigte $Na_2HPO_4$-Lösungen mit 496 ppm F (Beispiel 1–14) sowie 505 ppm F (Beispiele 15 und 16) und jeweils 19% $P_2O_5$ eingesetzt.

Jeweils 800 g dieser Lösung werden mit den in der Tabelle angegebenen Erdalkaliverbindungen bei unterschiedlichen Temperaturen und Verweilzeiten mit einem Magnetrührstab gerührt. Anschliessend wird über ein mit Polypropylen-Nadelfilz bespanntes Druckfilter (F = 80 cm$^2$) heiss abfiltriert. Röntgenaufnahmen des Filterkuchens belegen, dass $F^-$ ausschliesslich in Form von $CaF_2$ vorliegt.

Gemessen wird die Filtrationszeit und der F-Gehalt des abgereicherten Filtrats. Beispiele 8–12 sind als Vergleich zur Demonstration einer nicht erfindungsgemässen Arbeitsweise aufgenommen.

| Beispiel Nr. | Erdalkaliverbindung | | | Rührzeit in Std. | Temperatur in °C | Filterationsleistung in 1/m$^2$ h (ca.) | ppm F in gereinigter Phosphatlösung |
|---|---|---|---|---|---|---|---|
| | Art | Menge $Me^{2+}$ in g | % Anteil <8 µm$^d$ | | | | |
| 1 | CaO | 2,1 | 56 | 3 | 80 | 3000 | 250 |
| 2 | CaO | 2,1 | 100 | 3 | 80 | 3000 | 230 |
| 3 | $Ca(OH)_2$ | 0,85 | 81 | 2 | 100 | 2500 | 110 |
| 4 | $Ca(OH)_2$ | 2,1 | 81 | 2 | 100 | 2000 | 94 |
| 5 | $Ca(OH)_2$ | 4,2 | 81 | 2 | 100 | 2000 | 85 |
| 6 | $Ca(OH)_2$ | 8,4 | 81 | 2 | 100 | 2000 | 30 * |
| 7 | $Ca(OH)_2$ | 2,1 | 81 | 2 | 80 | 2000 | 170 |

| Beispiel Nr. | Erdalkaliverbindung | | | Rührzeit in Std. | Temperatur in °C | Filterations-leistung in 1/m² h (ca.) | ppm F in gereinigter Phosphat-lösung |
|---|---|---|---|---|---|---|---|
| | Art | Menge Me²⁺ in g | % Anteil < 8 μm[d] | | | | |
| 8[a, c] | $Ca(OH)_2$ | 2,1 | 81 | 2 | 40 | < 50 | 350 |
| 9[a] | $Ca(OH)_2$ | 2,1 | 81 | 5 | 80 | 3000 | 340 |
| 10[a] | $Ca(OH)_2$ | 2,1 | 25 | 2 | 80 | 3000 | 380 |
| 11[a] | $CaCO_3$ | 2,1 | 62 | 2 | 80 | 3000 | 490 |
| 12[a] | $Ca_5(PO_4)_3OH$[e] | 2,1 | 68 | 2 | 80 | 1500 | 370 |
| 13 | $Mg(OH)_2$ | 1,3 | 53 | 2 | 80 | 300 | 120 |
| 14[b] | $Ca(NO_3)_2$ | 2,1 | – | 1 | 80 | 1200 | 140 |
| 15 | $Ca(OH)_2$ | 4,2 | 81 | 2 | 100 | 2000 | 25 |
| 16[b] | $Ca(NO_3)_2$ | 4,2 | – | 2 | 100 | 1200 | 5 |

[a] Vergleichsbeispiel
[b] $Ca(NO_3)_2 \cdot 4 H_2O$ gelöst in 20 ml $H_2O$
[c] bei 80 °C abfiltriert
[d] gemessen auf «Microtrac-Particle Size Analyzer» in Kerosin
[e] hergestellt nach DE-A-2 635 893

## Patentansprüche

1. Verfahren zur Herstellung von fluorarmen Alkaliphosphatlösungen aus vorgereinigten Alkaliphosphatlösungen, die erhalten wurden durch Aufschluss von Phosphaterz mit Schwefelsäure, Abtrennen des dabei gebildeten Gipses von der rohen Nassverfahrensphosphorsäure, Neutralisation dieser Rohsäure mit Alkalien bis zu einem pH-Wert grösser als 6 und Abfiltrieren des ausgefällten Niederschlages von der entstandenen Alkaliphosphatlösung, dadurch gekennzeichnet, dass man die vorgereinigte Alkaliphosphatlösung mit einer Verbindung eines Erdalkalimetalls Me, die eine Wasserlöslichkeit bei 20 °C von mehr als 0,01 mol $Me^{2+}$/l aufweist, bei Temperaturen von 60 bis 120 °C verrührt, wobei Erdalkaliverbindungen, deren Wasserlöslichkeiten weniger als 5 g/l betragen, mit einer Korngrösse eingesetzt werden, die zu mehr als 50% unter 8 μm liegt, und man nach einer Reaktionszeit von 0,5 bis 4 Stunden den gebildeten Niederschlag von der gereinigten Alkaliphosphatlösung abtrennt.

2. Verfahren nach Anspruch 1, dadurch gekennzeichnet, dass man als Erdalkaliverbindungen mit geringer Wasserlöslichkeit feinteilige Erdalkalioxide oder -hydroxide einsetzt.

3. Verfahren nach Anspruch 1, dadurch gekennzeichnet, dass man Erdalkaliverbindungen mit hoher Wasserlöslichkeit in Form einer wässrigen Lösung der Alkaliphosphatlösung zusetzt.

4. Verfahren nach einem der Ansprüche 1 bis 3, dadurch gekennzeichnet, dass man die Erdalkaliverbindung, bezogen auf die Bildung des entsprechenden Erdalkalifluorids, in der 2 bis 20fachen stöchiometrischen Menge einsetzt.

5. Verfahren nach einem der Ansprüche 1 bis 4, dadurch gekennzeichnet, dass man den abgetrennten Niederschlag mit warmem Wasser auswäscht.

6. Verfahren nach einem der Ansprüche 1 bis 5, dadurch gekennzeichnet, dass man den abgetrennten Niederschlag in den Phosphaterzaufschluss zurückführt.

## Claims

1. A process for the preparation of alkali metal phosphate solutions of low fluorine content from alkali metal phosphate solutions which have been subjected to preliminary purification and have been obtained by digesting phosphate rock with sulfuric acid, removing the gypsum formed in the course of this from the crude wet process phosphoric acid, neutralizing this crude acid with alkalis to a pH value higher than 6 and removing the precipitate deposited from the resulting alkali metal phosphate solution by filtration, which comprises stirring the prepurified alkali metal phosphate solution at temperatures from 60 to 120 °C with a compound of an alkaline earth metal Me which has a solubility in water at 20 °C of more than 0.01 mole of $Me^{2+}$/l, employing alkaline earth metal compounds whose solubility in water is less than 5 g/l at a particle size which, to the extent of more than 50%, is below 8 μm, and, after a reaction time of 0.5 to 4 hours, removing the resulting precipitate from the purified alkali metal phosphate solution.

2. The process as claimed in claim 1, wherein finely divided alkaline earth metal oxides or hydroxides are employed as alkaline earth metal compounds of low solubility in water.

3. The process as claimed in claim 1, wherein alkaline earth metal compounds of high solubility in water are added in the form of an aqueous solution to the alkali metal phosphate solution.

4. The process as claimed in one of claims 1 to 3, wherein the alkaline earth metal compound is employed in a 2-fold to 20-fold stoichiometric amount, relative to the formation of the corresponding alkaline earth metal fluoride.

5. The process as claimed in one of claims 1 to 4, wherein the precipitate which has been removed is washed with warm water.

6. The process as claimed in one of claims 1 to 5, wherein the precipitate which has been removed is recycled to the digestion of phosphate rock.

## Revendications

1. Procédé de préparation de solutions de phosphates alcalins à faible teneur en fluor à partir de solutions de phosphates alcalins purifiées au préalable qui ont été obtenues par attaque de minerais de phosphate par l'acide sulfurique, séparation du sulfate de calcium formé à l'attaque et de l'acide phosphorique brut du procédé par voie humide, neutralisation de cet acide brut par des alcalis jusqu'à pH supérieur à 6 et séparation par filtration du précipité et de la solution de phosphate alcalin formée, caractérisé en ce que l'on mélange sous agitation la solution de phosphate alcalin purifiée au préalable avec un composé d'un métal alcalino-terreux Me ayant une solubilité dans l'eau à 20 °C supérieure à 0,01 mol de $Me^{+2}$/l, à des températures de 60 à 120 °C, avec utilisation de composés alcalino-terreux dont la solubilité dans l'eau est inférieure à 5 g/l, à une dimension de grain inférieure à 8 µm pour plus de 50% et en ce que, après une durée de réaction de 0,5 à 4 heures, on sépare le précipité formé de la solution de phosphate alcalin purifiée.

2. Procédé selon la revendication 1, caractérisé en ce que l'on utilise en tant que composés alcalino-terreux à faible solubilité dans l'eau des oxydes ou hydroxydes alcalino-terreux en fines particules.

3. Procédé selon la revendication 1, caractérisé en ce que l'on ajoute les composés alcalino-terreux à forte solubilité dans l'eau à l'état de solutions aqueuses à la solution de phosphate alcalin.

4. Procédé selon l'une des revendications 1 à 3, caractérisé en ce que l'on utilise le composé alcalino-terreux en quantité de 2 à 20 fois la quantité théorique correspondant à la formation du fluorure alcalino-terreux.

5. Procédé selon l'une des revendications 1 à 4, caractérisé en ce que l'on lave le précipité séparé à l'eau chaude.

6. Procédé selon l'une des revendications 1 à 5, caractérisé en ce que l'on recycle le précipité séparé à l'attaque du minerai de phosphate.